# EUROPEAN PATENT SPECIFICATION

(11) **EP 3 054 386 B1**
(45) Date of publication and mention of the grant of the patent: **19.06.2019**
(21) Application number: 14856211.9
(22) Date of filing: 16.04.2014
(51) Int. Cl.: G06F 17/30

(54) **EXECUTION PLAN STORAGE METHOD, DEVICE AND SYSTEM**
SPEICHERVERFAHREN, VORRICHTUNG UND SYSTEM FÜR AUSFÜHRUNGSPLAN
PROCÉDÉ, DISPOSITIF ET SYSTÈME DE MÉMORISATION DE PLAN D'EXÉCUTION

(30) Priority: 24.10.2013 CN 201310507367
(43) Date of publication of application: 10.08.2016
(73) Proprietor: Huawei Technologies Co., Ltd., Longgang District Shenzhen, Guangdong 518129 (CN)
(72) Inventor: YU, Wei, Shenzhen Guangdong 518129 (CN); WEN, Jijun, Shenzhen Guangdong 518129 (CN); LIU, Huijun, Shenzhen Guangdong 518129 (CN)
(74) Representative: Kreuz, Georg Maria
(86) International application number: PCT/CN2014/075520
(87) International publication number: WO 2015/058499

(56) References cited:
- CN-A- 101 184 106
- CN-A- 101 567 006
- CN-A- 101 567 006
- CN-A- 102 081 625
- CN-A- 103 577 561
- US-A1- 2011 167 056
- US-A1- 2012 084 315
- US-A1- 2012 143 847

## Description

### TECHNICAL FIELD

The present invention relates to the field of databases, and in particular, to a method, apparatus, and system for storing an execution plan.

### BACKGROUND

An execution plan in a database refers to a description of an execution process of a structured query language (SQL) request. Each time a database server executes a SQL request initiated by a client, the database server needs to parse the SQL request to generate a corresponding execution plan, and save the execution plan to a memory of the database server. Currently, when the database server saves an execution plan, the database server separately configures caches for different clients to save execution plans corresponding to the different clients.

When an execution plan is saved in a current execution plan storage manner, the database server separately configures caches for different clients. A cache occupied by an execution plan with a low utilization rate is released when a cache allocated to a client is saturated, so that an execution plan with a high utilization rate of the client is cached in the allocated cache, that is, the execution plan with a low utilization rate cannot be saved to the cache. Therefore, when the client initiates the SQL request again, the database server needs to re-parse the SQL request and generate a corresponding execution plan, which causes a lower cache hit rate of the execution plan and increases system overheads.

CN 101567006 A discloses a method for reusing execution plans corresponding to SQL statements, and the execution plans are stored in the database server. The client performs hash computing on the SQL and then the database server finds the execution plans in its cache if the SQL statement is not received firstly.

US 2012/0084315 A1 discloses a database system for optimizing a query plan reuse, where query plans are accessible by a plurality of client connections and where the database system contains a memory cache. The execution plans are stored in the memory cache of the database server. If a corresponding execution plan for an SQL statement is not found in the cache, then it is being generated and stored in the memory cache of the database server, otherwise the corresponding query plan found in the cache is being reused.

### SUMMARY

Embodiments of the present invention provide a method, apparatus, and system for storing an execution plan, which can improve a cache hit rate of an execution plan and reduce system overheads. The object of the invention is solved by the subject matter of the independent claims.

Further Implementation manners are subject matter of the dependent claims.

According to a first aspect, an embodiment of the present invention provides a method for storing an execution plan, including:
receiving, by a client, a structured query language SQL request; wherein a cache of the client saves at least one executed execution plan specified to be saved;
detecting, by the client, whether an execution plan corresponding to the SQL request exists in a cache of the client;
if an execution plan corresponding to the SQL request exists in the cache of the client, sending (103b), by the client, the execution plan to the database server, so that the database server executes the execution plan;
if no execution plan corresponding to the SQL request exists in the cache of the client, performing the following steps:
generating, by the client, location information where the location information is used to specify a cache location for saving the execution plan corresponding to the SQL request, and the cache location comprises the cache of the client;
sending, by the client, the location information and the SQL request to the database server;
if the location information specifies that the cache location of the execution plan is the cache of the client, receiving (105a), by the client, the execution plan generated and sent by the database server and saving the execution plan to the cache of the client.

With reference to the first aspect, in a first implementation manner of the first aspect, the sending, by the client, the execution plan to the database server if the execution plan corresponding to the SQL request exists in the cache of the client, so that the database server executes the execution plan specifically includes:
selecting, by the client if multiple execution plans corresponding to the SQL request exist in the cache of the client, any execution plan from the multiple execution plans and sending the selected execution plan to the database server.

With reference to the first aspect, in a first implementation manner of the first aspect, the sending, by the client, the execution plan to the database server if the execution plan corresponding to the SQL request exists in the cache of the client, so that the database server executes the execution plan specifically includes: selecting, by the client if multiple execution plans corresponding to the SQL request exist in the cache of the client, any execution plan from the multiple execution plans and sending the selected execution plan to the database server.

With reference to the first aspect, the first implementation manner of the first aspect, in a second implementation manner of the first aspect, before the sending, by the client, execution plan to the database server, the method further includes:
displaying, by the client by using a graphical interface, parameter information of the execution plan;
adjusting, by the client according to a parameter information modification instruction, the parameter information of the execution plan, and saving an adjusted execution plan to the cache of the client; and
the step of the sending, by the client, the execution plan to the database server include:
   sending, by the client, the adjusted execution plan to the database server.

According to a second aspect, an embodiment of the present invention provides a client for storing an execution plan, including:
a receiving unit, configured to receive a structured query language SQL request; wherein a cache of the client saves at least one executed execution plan specified to be saved;
a detection unit, configured to detect whether an execution plan received by the receiving unit and corresponding to the SQL request exists in a cache of the client;
a generation unit, configured to generate location information when no execution plan detected by the detection unit and corresponding to the SQL request exists in the cache of the client, where the location information is used to specify a cache location for saving the execution plan corresponding to the SQL request, and the cache location comprises the cache of the client; and
   a sending unit, configured to send the location information generated by the generation unit and the SQL request to the database server;
   wherein the receiving unit (21) is further configured to receive the execution plan sent by the database server and corresponding to the SQL request when the location information specifies that the cache location of the execution plan is the cache of the client;
the saving unit (27) is further configured to save the execution plan received by the receiving unit to the cache of the client; and
   the sending unit (24) is further configured to send the execution plan to the database server when the execution plan corresponding to the SQL request exists in the cache of the client, so that the database server executes the execution plan.

With reference to the second aspect or the first implementation manner of the second aspect, in a second implementation manner of the second aspect, the sending unit is further configured to, when multiple execution plans corresponding to the SQL request exist in the cache of the client, select any execution plan from the multiple execution plans and send the selected execution plan to the database server.

With reference to the second aspect, the first implementation manner of the second aspect, or the second implementation manner of the second aspect, in a third implementation manner of the second aspect, the apparatus further includes:
a displaying unit, configured to display, by using a graphical interface, parameter information of the execution plan detected by the detection unit;
an adjustment unit, configured to adjust, according to a parameter information modification instruction, the parameter information of the execution plan and displayed by the displaying unit; and
a saving unit, configured to save an adjusted execution plan to the cache of the client; where
the sending unit is further configured to send the execution plan adjusted by the adjustment unit to the database server.

According to a third aspect, an embodiment of the present invention provides a method for storing an execution plan, including:
receiving, by a database server, location information and a structured query language SQL request that are sent by a client, where the location information is used to indicate a cache location for saving the execution plan corresponding to the SQL request, and the cache location comprises a cache of the client;
acquiring, by the database server, the execution plan corresponding to the SQL request;
acquiring, by the database server according to the location information, the cache location of the execution plan; and
if the location information specifies that the cache location of the execution plan is the cache of the client, sending, by the database server, the execution plan to the client, so that the client saves the execution plan to the cache of the client;
wherein before the receiving, by a database server, location information and a structured query language SQL request that are sent by a client, the method further comprises:
receiving, by the database server if the execution plan corresponding to the SQL request exists in the cache of the client, the execution plan sent by the client, and executing the received execution plan.

According to a fourth aspect, an embodiment of the present invention provides a database server, including:
a receiving unit, configured to receive location information and a structured query language SQL request that are sent by a client, where wherein at least one executed execution plan specified to be saved is saved in a cache of the client, and the location information is used to specify a cache location for saving an execution plan corresponding to the SQL request, and the cache location comprises a cache of the client;
an acquiring unit, configured to acquire, according to the SQL request received by the receiving unit, the execution plan corresponding to the SQL request, where
the acquiring unit is further configured to acquire the cache location of the execution plan according to the location information; and
a sending unit, configured to send the execution plan to the client to save the execution plan when the location information specifies that the cache location of the execution plan is the cache of the client; wherein when the execution plan corresponding to the SQL request exists in the cache of the client, receive the execution plan sent by the client; and
the database server further comprises:
an execution unit (54), configured to execute the execution plan received by the receiving unit (51).

According to a fifth aspect, an embodiment of the present invention provides a system for storing an execution plan, including: a client and a database server, where
the client is configured to receive a structured query language SQL request, and detect whether an execution plan corresponding to the SQL request exists in a cache of the client; wherein the cache of the client saves at least one executed execution plan specified to be saved;
the client is further configured to, when an execution plan corresponding to the SQL request exists in the cache of the client, send the execution plan to the database server, so that the database server executes the execution plan; when no execution plan corresponding to the SQL request exists in the cache of the client, generate location information and send the location information and the SQL request to the database server, where the location information is used to specify a cache location for saving the execution plan corresponding to the SQL request, and the cache location comprises the cache of the client;
the database server is configured to receive the location information and the SQL request that are sent by the client, acquire the execution plan corresponding to the SQL request and acquire the cache location of the execution plan according to the location information; and
the database server is further configured to send the execution plan to the client when the location information specifies that the cache location of the execution plan is the cache of the client;
wherein the client is further configured to receive the execution plan sent by the database server and save the execution plan to the cache of the client.

Embodiments of the present invention provide a method, apparatus, and system for storing an execution plan. The client sends an SQL request and generated location information to the database server; and according to the received SQL request and the received location information, the database server generates and executes an execution plan corresponding to the SQL request, and saves the execution plan to a cache indicated by the location information. Compared with the prior art, in the embodiments of the present invention, an execution plan that has been executed by the client is saved to the cache of the client. This avoids that some execution plans cannot be saved to the cache, which improves a cache hit rate of an execution plan, and therefore reduces system overheads.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for storing an execution plan according to Embodiment 1 of the present invention;
FIG. 2 is a schematic structural diagram of an apparatus for storing an execution plan according to Embodiment 1 of the present invention;
FIG. 3 is a schematic structural diagram of a base station according to Embodiment 1 of the present invention;
FIG. 4 is a flowchart of a method for storing an execution plan according to Embodiment 2 of the present invention;
FIG. 5 is a schematic structural diagram of an apparatus for storing an execution plan according to Embodiment 2 of the present invention;
FIG. 6 is a schematic structural diagram of a base station according to Embodiment 2 of the present invention; and
FIG. 7 is a schematic diagram of a system for storing an execution plan according to Embodiment 3 of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To make the advantages of the technical solutions of the present invention clearer, the following describes the present invention in detail with reference to the accompanying drawings and embodiments.

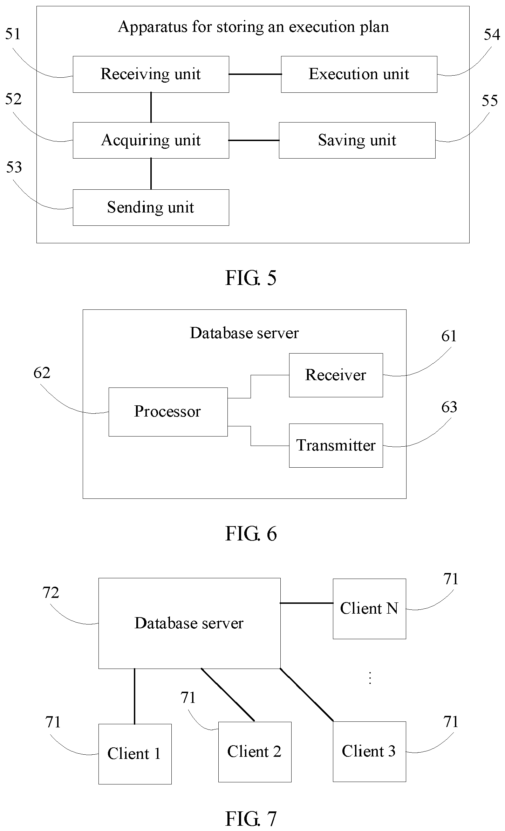

An embodiment of the present invention provides a method for storing an execution plan, which may be applied to a system as shown in FIG. 7, where the system includes at least one client and at least one database server. The client may send an SQL request and generated location information to the database server, and may further receive an execution plan sent by the database server and corresponding to the SQL request, and save the execution plan to a cache of the client; and the database server may receive the SQL request and the location information that are sent by the client, and may further send a generated execution plan corresponding to the SQL request to the client, where the execution plan corresponding to the SQL request can be saved to both the cache of the client and a cache of the database server.

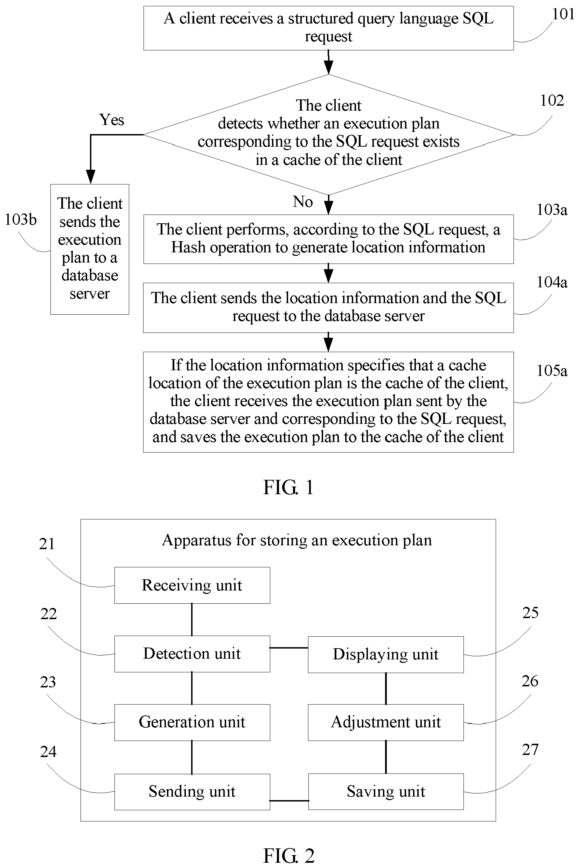

Based on the system, this embodiment of the present invention provides the method for storing an execution plan, as shown in FIG. 1, which may be applied to a client side, and the method includes: 101. The client receives the structured query language SQL request.

The SQL request is a database query language that is used to access data in a database system and query, update, and manage the database system. A user may enter, by using a disk operating system (DOS) command or a C++ language, an SQL statement that needs to be executed.

102. The client detects whether the execution plan corresponding to the SQL request exists in the cache of the client.

The execution plan corresponding to the SQL request is a specific execution process corresponding to the SQL request in the database system. The foregoing cache of the client saves an executed execution plan specified to be saved. The execution plan specified to be saved may be specifically specified by a user, or may be preconfigured in the database server, which is not limited in this embodiment of the present invention.

Optionally, step 102 may specifically include: searching execution plans one by one that are saved to the cache of the client, until the execution plan corresponding to the SQL request is found.

Optionally, step 102 may specifically further include: firstly, establishing, by the client, a Hash table, and saving, to the Hash table, location information of a location, in the cache of the client, of each execution plan; then, searching the Hash table for location information of a location, in the cache of the client, of the execution plan corresponding to the SQL request; and finally, searching the cache of the client for the execution plan corresponding to the SQL request by using the location information. This improves efficiency of searching for the execution plan corresponding to the SQL request.

103a. The client performs, according to the SQL request, a Hash operation to generate the location information if no execution plan corresponding to the SQL request exists in the cache of the client.

The location information is used to indicate a cache location of the execution plan corresponding to the SQL request, and the cache location is the cache of the client and/or the cache of the database server. In this embodiment of the present invention, the location information may be specifically specified in a Hint. In this case, when PlanCacheServer is specifically specified in the Hint, it is specified that the execution plan is saved to the database server; when PlanCacheClient is specifically specified in the Hint, it is specified that the execution plan is saved to the client; when PlanCacheAll is specifically specified in the Hint, it is specified that that the execution plan is saved to the database server and the client. If the client does not generate the location information, PlanCacheAll is used as the location information by default by the database server, that is, it is specified that the execution plan is saved to the database server and the client.

In this embodiment of the present invention, the client may perform, according to the SQL request, a Hash operation or other operations to generate the location information, which is not limited in this embodiment of the present invention.

By using the location information corresponding to the SQL request, it may be implemented that the cache location of the execution plan is determined according to a requirement of a user; and it is implemented that an execution plan that has been executed by the client is saved to the client. This avoids a problem of a low cache hit rate of an execution plan caused by a failure in permanently saving some execution plans to the database server resulting from limited cache space of the database server.

After step 103a, step 104a is further included: the client sends the location information and the SQL request to the database server.

Further, the database server generates the execution plan corresponding to the SQL request, and saves the execution plan after acquiring the cache location of the execution plan according to the location information.

The step of generating, by the database server, the execution plan corresponding to the SQL request may include: parsing, by the database server, the SQL request sent by the client, and generating the execution plan corresponding to the SQL request. Because a process of parsing the SQL request and generating the execution plan by the database server is time-consuming, a cache hit rate of the execution plan can be improved by saving all executed execution plans to the cache of the client and/or the cache of the database server. This avoids that the database server re-parses an executed SQL request and generates a corresponding execution plan due to a failure in permanently saving all executed execution plans to the current database server, which reduces system overheads.

In this embodiment of the present invention, the cache location of the execution plan may be specifically the cache of the database server or the cache of the client. Because a cache occupied by an execution plan that has been executed by the client is small, in this embodiment of the present invention, all or some execution plans that have been executed by the client are saved to the cache of the client, and a saturated cache of the client and a saturated cache of the database server do not occur, which improves a cache hit rate of an execution plan in comparison with that currently all execution plans that have been executed by the client are saved to the cache of the database server and some execution plans cannot be saved due to a saturated cache of the database server. Moreover, an execution plan saved in the cache of the client is still saved in the cache of the client after the client restarts. This avoids a case in which an execution plan saved in the database server is lost after the database server restarts.

In step 103b paralleled with step 103a: If the execution plan corresponding to the SQL request exists in the cache of the client, the client sends the execution plan to the database server.

Further, the database server executes the execution plan corresponding to the SQL request. In this embodiment of the present invention, when an executed execution plan has been saved to the cache of the client, the database server may directly execute the execution plan, and does not need to re-parse the SQL request corresponding to the execution plan to generate the execution plan, which improves efficiency of executing the SQL request.

Specifically, if multiple execution plans corresponding to the SQL request exist in the cache of the client, the client selects any execution plan from the multiple execution plans and sends the execution plan to the database server.

Generally, one SQL request corresponds to one execution plan; however, some complex SQL requests may correspond to multiple different execution plans. If multiple execution plans corresponding to the SQL request are saved to the cache of the client, in this case, the client selects any execution plan from the multiple execution plans and sends the execution plan to the database server. Preferably, the client may select a commonly used execution plan or an execution plan with short execution duration from the multiple execution plans and send the selected execution plan to the database server.

Optionally, before step 103b, the method may further include: displaying, by the client, parameter information of the execution plan by using a graphical interface; and adjusting, by the client, the parameter information of the execution plan according to a parameter information modification instruction, and saving an adjusted execution plan to the cache of the client. At this time, the client sends the adjusted execution plan to the database server.

The graphical interface is specifically a screen of the client, which uses a textbox and an arrow to display specific information about the execution plan and display each piece of parameter information corresponding to the execution plan, so that a user performs parameter modification in a more intuitive and quick manner. In this embodiment of the present invention, if parameter information of an execution plan is not adjusted, a process of executing the execution plan by the database server is a default process in the system rather than an optimal process. Therefore, adjusting parameter information of an execution plan can increase a speed of executing the execution plan in the database server. An adjusted execution plan is saved to the cache of the client as an added execution plan corresponding to the SQL request, and does not replace an execution plan that is not adjusted.

After step 104a, step 105a is further included: If the location information specifies that the cache location of the execution plan is the cache of the client, the client receives the execution plan sent by the database server and corresponding to the SQL request and saves the execution plan to the cache of the client.

In this embodiment of the present invention, because an executed execution plan may be saved to the cache of the client, a user may implement sharing of the execution plan between different clients by performing operations, such as copy, import, and export, on the execution plan saved to the cache of the client. Specifically, the client copies the execution plan in the cache and saves the execution plan in a form of a file. In this case, other clients may acquire the file of the execution plan and restore the execution plan in the cache of the current client, thereby implementing sharing of the execution plan between different clients.

Further, as a specific implementation of the method shown in FIG. 1, this embodiment of the present invention provides an apparatus for storing an execution plan. As shown in FIG. 2, an entity of the apparatus may be a client, where the apparatus includes: a receiving unit 21, a detection unit 22, a generation unit 23, and a sending unit 24.

The receiving unit 21 is configured to receive a structured query language SQL request.

The detection unit 22 is configured to detect whether an execution plan received by the receiving unit 21 and corresponding to the SQL request exists in a cache of the client.

The generation unit 23 is configured to generate location information when no execution plan detected by the detection unit 22 and corresponding to the SQL request exists in the cache of the client, where
the location information is used to indicate a cache location of the execution plan corresponding to the SQL request, and the cache location is the cache of the client and/or, in an example outside the scope of protection of the the invention, a cache of a database server.

The sending unit 24 is configured to send the location information and the SQL request to the database server.

The sending unit 24 is further configured to send the execution plan to the database server when the execution plan corresponding to the SQL request exists in the cache of the client.

The sending unit 24 is further configured to, when multiple execution plans corresponding to the SQL request exist in the cache of the client, select any execution plan from the multiple execution plans and send the selected execution plan to the database server.

Optionally, the apparatus may further include: a displaying unit 25, an adjustment unit 26, and a saving unit 27.

The displaying unit 25 is configured to display, by using a graphical interface, parameter information of the execution plan detected by the detection unit 22.

The adjustment unit 26 is configured to adjust, according to a parameter information modification instruction, the parameter information of the execution plan and displayed by the displaying unit 25.

The saving unit 27 is configured to save an adjusted execution plan to the cache of the client.

The sending unit 24 is further configured to send the execution plan adjusted by the adjustment unit 26 to the database server.

The receiving unit 21 is further configured to receive the execution plan sent by the database server and corresponding to the SQL request when the location information specifies that the cache location of the execution plan is the cache of the client.

The saving unit 27 is further configured to save the execution plan received by the receiving unit 21 to the cache of the client.

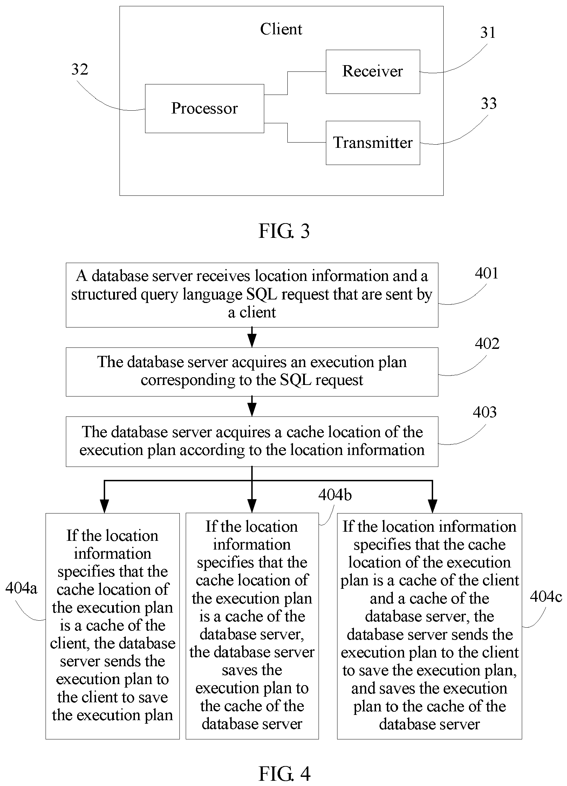

The generation unit 23 is further configured to perform, according to the SQL request, a Hash operation to generate the location information when no execution plan corresponding to the SQL Still further, the entity of the apparatus for storing an execution plan may be a client. As shown in FIG. 3, the client may include: a receiver 31, a processor 32, and a transmitter 33.

The receiver 31 is configured to receive a structured query language SQL request.

The processor 32 is configured to detect whether an execution plan corresponding to the SQL request exists in a cache of the client.

The processor 32 is further configured to generate location information when no execution plan corresponding to the SQL request exists in the cache of the client, where
the location information is used to indicate a cache location of the execution plan corresponding to the SQL request, and the cache location is the cache of the client and/or, in an example outside the scope of protection of the invention, a cache of a database server.

The transmitter 33 is configured to send the location information and the SQL request to the database server.

The transmitter 33 is further configured to send the execution plan to the database server when the execution plan corresponding to the SQL request exists in the cache of the client.

The transmitter 33 is further configured to, when multiple execution plans corresponding to the SQL request exist in the cache of the client, select any execution plan from the multiple execution plans and send the selected execution plan to the database server.

The processor 32 is further configured to display parameter information of the execution plan by using a graphical interface.

The processor 32 is further configured to adjust the parameter information of the execution plan according to a parameter information modification instruction.

The processor 32 is further configured to save an adjusted execution plan to the cache of the client.

The transmitter 33 is further configured to send the execution plan to the database server.

The receiver 31 is configured to receive the execution plan sent by the database server and corresponding to the SQL request when the location information specifies that the cache location of the execution plan is the cache of the client.

The processor 32 is further configured to save the execution plan to the cache of the client.

The processor 32 is further configured to perform, according to the SQL request, a Hash operation to generate the location information when no execution plan corresponding to the SQL request exists in the cache of the client.

It should be noted that, for other corresponding descriptions of each function unit in the apparatus for storing an execution plan provided in this embodiment of the present invention, refer to corresponding descriptions of FIG. 1, and details are not repeatedly described herein.

According to the method and apparatus for storing an execution plan provided in this embodiment of the present invention, a client sends an SQL request and generated location information to a database server; and according to the received SQL request and the received location information, the database server generates and executes an execution plan corresponding to the SQL request, and saves the execution plan to a cache indicated by the location information. Compared with the prior art, in this embodiment of the present invention, an execution plan that has been executed by the client is saved to the cache of the client. This avoids that some execution plans cannot be saved to the cache, which improves a cache hit rate of an execution plan, and therefore reduces system overheads.

An embodiment of the present invention provides a method for storing an execution plan, which may be applied to a system as shown in FIG. 7, where the system includes at least one client and at least one database server. The client may send an SQL request and generated location information to the database server, and may further receive an execution plan sent by the database server and corresponding to the SQL request, and save the execution plan to a cache of the client; and the database server may receive the SQL request and the location information that are sent by the client, and may further send a generated execution plan corresponding to the SQL request to the client, where the execution plan corresponding to the SQL request can be saved to both the cache of the client and a cache of the database server.

Based on the system, this embodiment of the present invention provides the method for storing an execution plan, as shown in FIG. 4, which may be applied to a database server side, and the method includes:
401. The database server receives the location information and the structured query language SQL request that are sent by the client.

Optionally, before step 401, the method may further include: receiving, by the database server if the execution plan corresponding to the SQL request sent by the client exists in the cache of the client, the execution plan sent by the client, and then directly executing the execution plan. The database server does not need to re-parse the SQL request corresponding to the execution plan to generate the execution plan, which improves efficiency of executing the SQL request.

Specifically, if multiple execution plans corresponding to the SQL request exist in the cache of the client, the database server receives any execution plan selected from the multiple execution plans and sent by the client, and executes the selected execution plan.

Generally, one SQL request corresponds to one execution plan; however, some complex SQL requests may correspond to multiple different execution plans. If multiple execution plans corresponding to the SQL request are saved to the cache of the client, in this case, the client selects any execution plan from the multiple execution plans and sends the selected execution plan to the database server. Preferably, the database server receives a commonly used execution plan or an execution plan with a short execution duration, where the commonly used execution plan or the execution plan with short execution duration is selected from the multiple execution plans and sent by the client.

Alternatively, if the execution plan corresponding to the SQL request exists in the cache of the client, and the client performs a parameter adjustment on the execution plan by using a graphical interface, the database server receives an adjusted execution plan sent by the client, and executes the execution plan.

The graphical interface is specifically a screen of the client, which uses a textbox and an arrow to display specific information about the execution plan and display each piece of parameter information corresponding to the execution plan, so that a user performs parameter modification more intuitively and quickly. In this embodiment of the present invention, if parameter information of an execution plan is not adjusted, a process of executing the execution plan by the database server is a default process in the system rather than an optimal process. Therefore, adjusting parameter information of an execution plan can increase a speed of executing the execution plan in the database server. An adjusted execution plan is saved to the cache of the client as an added execution plan corresponding to the SQL request, and does not replace an execution plan that is not adjusted.

The database server in this embodiment of the present invention may be specifically a database server, where the database server may provide a user with services such as query, update, and management.

402. The database server acquires the execution plan corresponding to the SQL request.

In this embodiment, step 402 may be specifically: searching, by the database server, the cache to detect whether the execution plan corresponding to the SQL request exists in the cache, where if the execution plan corresponding to the SQL request exists in the cache of the database server, the database server directly acquires the execution plan, so that the database server executes the execution plan corresponding to the SQL request; or if no execution plan corresponding to the SQL request exists in the cache of the database server, the database server parses the SQL request and generates the execution plan corresponding to the SQL request, so that the database server executes the execution plan corresponding to the SQL request.

403. The database server acquires the cache location of the execution plan according to the location information.

The location information is used to indicate a cache location of the execution plan corresponding to the SQL request, and the cache location is the cache of the client and/or the cache of the database server. In this embodiment of the present invention, the location information may be specifically specified in a Hint. In this case, when PlanCacheServer is specifically specified in the Hint, it is specified that the execution plan is saved to the cache of the database server; when PlanCacheClient is specifically specified in the Hint, it is specified that the execution plan is saved to the cache of the client; when PlanCacheAll is specifically specified in the Hint, it is specified that the execution plan is saved to the cache of the database server and the cache of the client. If the client does not generate the location information that needs to be carried in the SQL request, PlanCacheAll is used as the location information by default by the database server, that is, it is specified that the execution plan is saved to the cache of the database server and the cache of the client.

In this embodiment of the present invention, the client may perform, according to the SQL request, a Hash operation or other operations to generate the location information, which is not limited in this embodiment of the present invention.

By using the location information corresponding to the SQL request, it may be implemented that the cache location of the execution plan is determined according to a requirement of a user; and it is implemented that an execution plan that has been executed by the client is saved to the client. This avoids a problem of a low cache hit rate of an execution plan caused by a failure in permanently saving some execution plans to the database server resulting from limited cache space of the database server.

404a. If the location information specifies that the cache location of the execution plan is the cache of the client, the database server sends the execution plan to the client to save the execution plan.

In this embodiment of the present invention, because the cache of the client is sufficient to store all execution plans of the client, and a loss of the execution plans saved to the cache of the client will not be caused by a client restart, the database server can ensure, by sending the execution plans to the client to save the execution plans, that all execution plans are saved permanently in the cache of the client. Moreover, because all execution plans of the client can be saved permanently in the cache of the client, when receiving the SQL request again, the database server does not need to re-parse the SQL request to generate the execution plan corresponding to the SQL request, which reduces system overheads.

In step 404b paralleled with step 404a: if the location information specifies that the cache location of the execution plan is the cache of the database server, the database server saves the execution plan to the cache of the database server.

In step 404c paralleled with step 404a and step 404b: if the location information specifies that the cache location of the execution plan is the cache of the client and the cache of the database server, the database server sends the execution plan to the client to save the execution plan, and saves the execution plan to the cache of the database server.

According to this embodiment of the present invention, an execution plan corresponding to an SQL request of a client is saved to both a cache of the client and a cache of a database server, which improves a cache hit rate of the execution plan corresponding to the SQL request; moreover, by saving the execution plan corresponding to the SQL request to the cache of the database server, when another client sends the SQL request to the database server, the database server can directly find the execution plan corresponding to the SQL request and execute the execution plan, which improves efficiency of executing an execution plan.

Further, as a specific implementation of the method shown in FIG. 4, this embodiment of the present invention provides an apparatus for storing an execution plan. As shown in FIG. 5, an entity of the apparatus may be a database server, where the apparatus includes: a receiving unit 51, an acquiring unit 52, and a sending unit 53.

The receiving unit 51 is configured to receive location information and a structured query language SQL request that are sent by a client, where
the location information is used to indicate a cache location of an execution plan corresponding to the SQL request, and the cache location is a cache of the client and/or, in an example outside the scope of protection of the invention, a cache of the database server.

The acquiring unit 52 is configured to acquire, according to the SQL request received by the receiving unit 51, the execution plan corresponding to the SQL request.

The acquiring unit 52 is further configured to acquire the cache location of the execution plan according to the location information.

The sending unit 53 is configured to send the execution plan to the client to save the execution plan when the location information specifies that the cache location of the execution plan is the cache of the client.

The receiving unit 51 is further configured to, when the execution plan corresponding to the SQL request exists in the cache of the client, receive the execution plan sent by the client.

Optionally, the apparatus may further include: an execution unit 54.

The execution unit 54 is configured to execute the execution plan received by the receiving unit 51.

The receiving unit 51 is further configured to, when multiple execution plans corresponding to the SQL request exist in the cache of the client, receive any execution plan selected from the multiple execution plans and sent by the client.

The execution unit 54 is further configured to execute the any execution plan received by the receiving unit 51.

The receiving unit 51 is further configured to, when the execution plan corresponding to the SQL request exists in the cache of the client, and the client performs a parameter adjustment on the execution plan by using a graphical interface, receive an adjusted execution plan sent by the client.

The execution unit 54 is further configured to execute the adjusted execution plan received by the receiving unit 51.

Optionally, the apparatus may further include: a saving unit 55.

The saving unit 55 is configured to save the execution plan to the cache of the database server when the location information specifies that the cache location of the execution plan is the cache of the database server.

Still further, the entity of the apparatus for storing an execution plan may be a database server. As shown in FIG. 6, the database server may include: a receiver 61, a processor 62, and a transmitter 63.

The receiver 61 is configured to receive location information and a structured query language SQL request that are sent by a client, where
the location information is used to indicate a cache location of an execution plan corresponding to the SQL request, and the cache location is a cache of the client and/or, in an example outside the scope of protection of the invention, a cache of the database server.

The processor 62 is configured to acquire, according to the SQL request, the execution plan corresponding to the SQL request.

The processor 62 is further configured to acquire the cache location of the execution plan according to the location information.

The transmitter 63 is configured to send the execution plan to the client to save the execution plan when the location information specifies that the cache location of the execution plan is the cache of the client.

The receiver 61 is further configured to, when the execution plan corresponding to the SQL request exists in the cache of the client, receive the execution plan sent by the client.

The processor 62 is further configured to execute the execution plan.

The receiver 61 is further configured to, when multiple execution plans corresponding to the SQL request exist in the cache of the client, receive any execution plan selected from the multiple execution plans and sent by the client.

The processor 62 is further configured to execute the any execution plan.

The receiver 61 is further configured to, when the execution plan corresponding to the SQL request exists in the cache of the client, and the client performs a parameter adjustment on the execution plan by using a graphical interface, receive an adjusted execution plan sent by the client.

The processor 62 is further configured to execute the adjusted execution plan.

The processor 62 is further configured to save the execution plan to the cache of the database server when the location information specifies that the cache location of the execution plan is the cache of the database server.

It should be noted that, for other corresponding descriptions of each function unit in the apparatus for storing an execution plan provided in this embodiment of the present invention, reference may be made to corresponding descriptions of FIG. 4, and details are not repeatedly described herein.

According to the method and apparatus for storing an execution plan provided in this embodiment of the present invention, a client sends an SQL request and generated location information to a database server; and according to the received SQL request and the received location information, the database server generates and executes an execution plan corresponding to the SQL request, and saves the execution plan to a cache indicated by the location information. Compared with the prior art, in this embodiment of the present invention, an execution plan that has been executed by the client is saved to the cache of the client. This avoids that some execution plans cannot be saved to the cache, which improves a cache hit rate of an execution plan, and therefore reduces system overheads.

An embodiment of the present invention provides a system for storing an execution plan. As shown in FIG. 7, the system includes: at least one client 71 and at least one database server 72.

The client 71 is configured to: first acquire a structured query language SQL request, and then detect whether an execution plan corresponding to the SQL request exists in a cache; and when no execution plan corresponding to the SQL request exists in the cache, generate location information and send the location information and the SQL request to the database server 72.

The database server 72 is configured to: first receive the location information and the SQL request that are sent by the client 71, and then acquire the execution plan corresponding to the SQL request according to the SQL request; and acquire a cache location of the execution plan according to the location information, and send the execution plan to the client 71 to save the execution plan when the location information specifies that the cache location of the execution plan is the cache of the client 71.

According to the system for storing an execution plan provided in this embodiment of the present invention, a client sends an SQL request and generated location information to a database server; and according to the received SQL request and the received location information, the database server generates and executes an execution plan corresponding to the SQL request, and saves the execution plan to a cache indicated by the location information. Compared with that currently a database server configures caches in the database server separately for different clients when saving an execution plan so as to save execution plans corresponding to different clients, in this embodiment of the present invention, an execution plan that has been executed by the client is saved to the cache of the client. This avoids that some execution plans cannot be saved to the cache, which improves a cache hit rate of an execution plan, and therefore reduces system overheads.

The method, apparatus, and system provided in the embodiments of the present invention may further be used to resolve some problems existing in a stand-alone database, a dual-node database, and a cluster database.

For example, in a stand-alone database scenario, a cache of a stand-alone database server is insufficient to store all execution plans corresponding to all clients. With the method provided in the embodiments of the present invention, the execution plans that need to be saved to the cache of the stand-alone database server may be saved to caches of all the clients corresponding to the stand-alone database server, which reduces cache space occupied by the execution plans in the cache of the stand-alone database server.

In a dual-node database scenario, because a dual-node database server randomly saves execution plans to one database of two databases, when a client initiates an SQL request, the dual-node database server needs to search all execution plans in the two databases. Therefore, in the dual-node database scenario, complexity of searching for an execution plan corresponding to the SQL request is high. With the method provided in the embodiments of the present invention, an executed execution plan corresponding to an SQL request may be saved to a cache of a client; when the client initiates an SQL request, an execution plan corresponding to the request may be directly acquired from the cache of the client. This avoids the dual-node database server from searching all execution plans in the two databases, which further reduces searching complexity of the dual-node database server.

Similarly, in a cluster database scenario, because a cluster database server randomly saves execution plans to one database of multiple databases, when a client initiates an SQL request, the cluster database server needs to search all execution plans in all databases. Therefore, in the cluster database scenario, complexity of searching for an execution plan corresponding to the SQL request is high. With the method provided in the embodiments of the present invention, an executed execution plan corresponding to an SQL request may be saved to a cache of a client; when the client initiates an SQL request, an execution plan corresponding to the request may be directly acquired from the cache of the client. This avoids the cluster database server from searching all execution plans in all databases, which further reduces searching complexity of the cluster database server.

The apparatus for storing an execution plan provided in embodiments of the present invention can implement the foregoing provided method embodiments. For detailed function implementation, reference may be made to descriptions in the method embodiments, and details are not described herein again. The method, apparatus, and system for storing an execution plan provided in the embodiments of the present invention may be applicable to improving a cache hit rate of an execution plan and reducing system overheads, but is not limited thereto.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM), or a random access memory (RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for storing an execution plan, comprising:
receiving (101), by a client, a structured query language, SQL, request; wherein a cache of the client saves at least one executed execution plan specified to be saved;
detecting (102), by the client, whether an execution plan corresponding to the SQL request exists in the cache of the client;
if an execution plan corresponding to the SQL request exists in the cache of the client, sending (103b), by the client, the execution plan to the database server, so that the database server executes the execution plan;
if no execution plan corresponding to the SQL request exists in the cache of the client, performing the following steps:
generating (103a), by the client, location information, wherein the location information is used to specify a cache location for saving the execution plan corresponding to the SQL request, and the cache location comprises the cache of the client,
sending (104a), by the client, the location information and the SQL request to the database server;
if the location information specifies that the cache location of the execution plan is the cache of the client, receiving (105a), by the client, the execution plan generated and sent by the database server and saving the execution plan to the cache of the client.

2. The method for storing an execution plan according to claim 1, wherein the sending, by the client, the execution plan to the database server if the execution plan corresponding to the SQL request exists in the cache of the client, so that the database server executes the execution plan comprises:
selecting, by the client if multiple execution plans corresponding to the SQL request exist in the cache of the client, any execution plan from the multiple execution plans and sending the selected execution plan to the database server.

3. The method for storing an execution plan according to claim 1, wherein before sending, by the client, the execution plan to the database server, the method further comprises:
displaying, by the client by using a graphical interface, parameter information of the execution plan;
adjusting, by the client according to a parameter information modification instruction, the parameter information of the execution plan, and saving an adjusted execution plan to the cache of the client; and
the step of the sending, by the client, the execution plan to the database server comprises:
sending, by the client, the adjusted execution plan to the database server.

4. A method for storing an execution plan, comprising:
receiving (401), by a database server, location information and a structured query language, SQL, request that are sent by a client, wherein at least one executed execution plan specified to be saved is saved in a cache of the client, and wherein the location information is used to specify a cache location for saving an execution plan corresponding to the SQL request, and the cache location comprises a cache of the client;
acquiring (402), by the database server, the execution plan corresponding to the SQL request;
acquiring (403), by the database server according to the location information, the cache location of the execution plan; and
if the location information specifies that the cache location of the execution plan is the cache of the client, sending (404a), by the database server, the execution plan to the client, so that the client saves the execution plan to the cache of the client,
wherein before the receiving, by a database server, location information and a structured query language SQL request that are sent by a client, the method further comprises:
receiving, by the database server if the execution plan corresponding to the SQL request exists in the cache of the client, the execution plan sent by the client, and executing the received execution plan.

5. A client, comprising:
a receiving unit (21), configured to receive a structured query language, SQL, request; wherein a cache of the client saves at least one executed execution plan specified to be saved;
a detection unit (22), configured to detect whether an execution plan received by the receiving unit and corresponding to the SQL request exists in the cache of a client;
a generation unit (23), configured to generate location information when no execution plan detected by the detection unit and corresponding to the SQL request exists in the cache of the client, wherein the location information is used to specify a cache location for saving the execution plan corresponding to the SQL request, and the cache location comprises the cache of the client; and
a sending unit (24), configured to send the location information generated by the generation unit (23) and the SQL request to the database server; wherein:
the receiving unit (21) is further configured to receive the execution plan sent by the database server and corresponding to the SQL request when the location information specifies that the cache location of the execution plan is the cache of the client; and
the saving unit (27) is further configured to save the execution plan received by the receiving unit to the cache of the client;
wherein:
the sending unit (24) is further configured to send the execution plan to the database server when the execution plan corresponding to the SQL request exists in the cache of the client, so that the database server executes the execution plan.

6. The client according to claim 5, wherein:
the sending unit (24) is further configured to, when multiple execution plans corresponding to the SQL request exist in the cache of the client, select any execution plan from the multiple execution plans and send the selected execution plan to the database server.

7. The client according to claim 5 or 6, wherein the apparatus further comprises:
a displaying unit (25), configured to display, by using a graphical interface, parameter information of the execution plan detected by the detection unit;
an adjustment unit (26), configured to adjust, according to a parameter information modification instruction, the parameter information of the execution plan and displayed by the displaying unit (25); and
a saving unit (27), configured to save an adjusted execution plan to the cache of the client; wherein
the sending unit (24) is further configured to send the execution plan adjusted by the adjustment unit (26) to the database server.

8. A database server, comprising:
a receiving unit (51), configured to receive location information and a structured query language, SQL, request that are sent by a client, wherein at least one executed execution plan specified to be saved is saved in a cache of the client, and wherein the location information is used to specify a cache location for saving the execution plan corresponding to the SQL request, and the cache location comprises a cache of the client;
an acquiring unit (52), configured to acquire, according to the SQL request received by the receiving unit, the execution plan corresponding to the SQL request, wherein
the acquiring unit (52) is further configured to acquire the cache location of the execution plan according to the location information; and
a sending unit (53), configured to send the execution plan to the client to save the execution plan when the location information specifies that the cache location of the execution plan is the cache of the client,
wherein when the execution plan corresponding to the SQL request exists in the cache of the client, receive the execution plan sent by the client; and
the database server further comprises:
an execution unit (54), configured to execute the execution plan received by the receiving unit (51).

9. A system for storing an execution plan, comprising: a client and a database server, wherein
the client is configured to receive a structured query language, SQL, request, and detect whether an execution plan corresponding to the SQL request exists in a cache of the client; wherein the cache of the client saves at least one executed execution plan specified to be saved;
the client is further configured to, when an execution plan corresponding to the SQL request exists in the cache of the client, send the execution plan to the database server, so that the database server executes the execution plan; when no execution plan corresponding to the SQL request exists in the cache of the client, generate location information and send the location information and the SQL request to the database server, wherein the location information is used to specify a cache location for saving the execution plan corresponding to the SQL request, and the cache location comprises the cache of the client;
the database server is configured to receive the location information and the SQL request that are sent by the client, acquire the execution plan corresponding to the SQL request and acquire the cache location of the execution plan according to the location information; and
the database server is further configured to send the execution plan to the client when the location information specifies that the cache location of the execution plan is the cache of the client;
wherein the client is further configured to receive the execution plan sent by the database server and save the execution plan to the cache of the client.

## Patentansprüche

1. Verfahren zum Speichern eines Ausführungsplans, umfassend:
Empfang (101) einer "Structured Query Language"-, SQL, Anforderung durch einen Client; wobei ein Cache des Clients mindestens einen ausgeführten Ausführungsplan speichert, der als zum Speichern vorgegeben ist;
Erkennung (102) durch den Client, ob ein Ausführungsplan, der der SQL-Anforderung entspricht, im Cache des Clients existiert;
wenn ein Ausführungsplan, der der SQL-Anforderung entspricht, im Cache des Clients existiert, Senden des Ausführungsplans (103b) durch den Client an den Datenbankserver, sodass der Datenbankserver den Ausführungsplan ausführt;
wenn kein Ausführungsplan, der der SQL-Anforderung entspricht, im Cache des Clients existiert, Durchführen der folgenden Schritte:
Erzeugen (103a) von Ortsinformationen durch den Client, wobei die Ortsinformationen verwendet werden, um einen Cache-Ort vorzugeben, um den Ausführungsplan zu speichern, der der SQL-Anforderung entspricht, und der Cache-Ort den Cache des Clients umfasst,
Senden (104a) der Ortsinformationen und der SQL-Anforderung durch den Client an den Datenbankserver;
wenn die Ortsinformationen vorgeben, dass der Cache-Ort des Ausführungsplans der Cache des Clients ist, Empfangen (105a) des Ausführungsplans, der erzeugt und durch den Datenbankserver verschickt wurde, durch den Client, und Speichern des Ausführungsplans auf dem Cache des Clients.

2. Verfahren zum Speichern eines Ausführungsplans nach Anspruch 1, wobei der Versand des Ausführungsplans durch den Client an den Datenbankserver, wenn der Ausführungsplan, der der SQL-Anforderung entspricht, im Cache des Clients existiert, sodass der Datenbankserver den Ausführungsplan ausführt, umfasst:
Auswahl eines Ausführungsplans aus den mehreren Ausführungsplänen durch den Client, wenn mehrere Ausführungspläne, die der SQL Anforderung entsprechen, im Cache des Clients existieren, und Versand des gewählten Ausführungsplans an den Datenbankserver.

3. Verfahren zum Speichern eines Ausführungsplans nach Anspruch 1, wobei das Verfahren vor dem Senden des Ausführungsplans durch den Client an den Datenbankserverfurther ferner umfasst:
Anzeige von Parameterinformationen des Ausführungsplans durch den Client durch Verwendung einer grafischen Schnittstelle;
Anpassung der Parameterinformationen des Ausführungsplans durch den Client nach einer Parameterinformationsmodifizierungsanweisung und Speichern eines angepassten Ausführungsplans im Cache des Clients; und
der Schritt des Versands des Ausführungsplans durch den Client an den Datenbankserver umfasst: Versand des angepassten Ausführungsplans durch den Client an den Datenbankserver.

4. Verfahren zum Speichern eines Ausführungsplans, umfassend:
Empfang (401) von Ortsinformationen und einer "Structured Query Language"-, SQL, Anforderung durch einen Datenbankserver, die durch einen Client verschickt werden, wobei mindestens ein ausgeführter Ausführungsplan, der als zu speichern vorgegeben ist, in einem Cache des Clients gespeichert wird, und wobei die Ortsinformationen verwendet werden, um einen Cache-Ort anzugeben, um einen Ausführungsplan zu speichern, der der SQL-Anforderung entspricht, und der Cache-Ort einem Cache des Clients entspricht;
Erfassen (402) des Ausführungsplans, der der SQL-Anforderung entspricht, durch den Datenbankserver;
Erfassen (403) des Cache-Orts des Ausführungsplans durch den Datenbankserver nach den Ortsinformationen; und
wenn die Ortsinformationen vorgeben, dass der Cache-Ort des Ausführungsplans der Cache des Clients ist, Senden (404a) des Ausführungsplans durch den Datenbankserver an den Client, sodass der Client den Ausführungsplan auf dem Cache des Clients speichert,
wobei das Verfahren vor dem Empfangen von Ortsinformationen und einer "Structured Query Language"- SQL Anforderung, die durch einen Client gesendet werden, durch einen Datenbankserver ferner umfasst:
Empfang des durch den Client versendeten Ausführungsplans durch den Datenbankserver, wenn der Ausführungsplan, der der SQL-Anforderung entspricht, im Cache des Clients existiert, und Ausführung des empfangenen Ausführungsplans.

5. Client, umfassend:
eine Empfängereinheit (21), konfiguriert zum Empfang einer "Structured Query Language"-, SQL, Anforderung durch einen Client; wobei ein Cache des Clients mindestens einen ausgeführten Ausführungsplan speichert, der als zum Speichern vorgegeben ist;
eine Erkennungseinheit (22), konfiguriert zur Erkennung, ob ein Ausführungsplan, der durch die Empfängereinheit empfangen wird und der SQL-Anforderung entspricht, im Cache eines Clients existiert;
eine Erzeugungseinheit (23), konfiguriert, Ortsinformationen zu erzeugen, wenn kein Ausführungsplan, der durch die Erkennungseinheit erkannt wurde und der SQL-Anforderung entspricht, im Cache des Clients existiert, wobei die Ortsinformationen verwendet werden, um einen Cache-Ort zum Speichern des Ausführungsplans vorzugeben, der der SQL-Anforderung entspricht, und der Cache-Ort den Cache des Clients umfasst; und
eine Sendeeinheit (24), konfiguriert, die Ortsinformationen, die durch die Erzeugungseinheit (23) erzeugt wurden, und die SQL-Anforderung an den Datenbankserver zu senden; wobei:
die Empfängereinheit (21) ferner konfiguriert ist, den Ausführungsplan zu empfangen, der durch den Datenbankserver verschickt wird, und der SQL-Anforderung entspricht, wenn die Ortsinformationen vorgeben, dass der Cache-Ort des Ausführungsplans der Cache des Clients ist; und
die Speichereinheit (27) ferner konfiguriert ist, den Ausführungsplan, der durch die Empfängereinheit empfangen wurde, im Cache des Clients zu speichern; wobei:
die Sendeeinheit (24) ferner konfiguriert ist, den Ausführungsplan an den Datenbankserver zu senden, wenn der Ausführungsplan, der der SQL-Anforderung entspricht, im Cache des Clients existiert, sodass der Datenbankserver den Ausführungsplan ausführt.

6. Client nach Anspruch 5, wobei:
die Sendeeinheit (24) ferner konfiguriert ist, wenn mehrere Ausführungspläne, die der SQL Anforderung entsprechen, im Cache des Clients existieren, einen Ausführungsplan aus den mehreren Ausführungsplänen zu wählen und den gewählten Ausführungsplan an den Datenbankserver zu versenden.

7. Client nach Anspruch 5 oder 6, wobei die Vorrichtung ferner umfasst:
eine Anzeigeeinheit (25), konfiguriert zur Anzeige von Parameterinformationen des Ausführungsplans, die durch die Erkennungseinheit erkannt wurden, unter Verwendung einer grafischen Oberfläche;
eine Anpassungseinheit (26), konfiguriert zur Anpassung nach einer Parameterinformationsänderungsanweisung der Parameterinformationen des Ausführungsplans und durch die Anzeigeeinheit (25) angezeigt; und
eine Speichereinheit (27), konfiguriert zum Speichern eines angepassten Ausführungsplans im Cache des Clients; wobei
die Sendeeinheit (24) ferner konfiguriert ist, den durch die Anpassungseinheit (26) angepassten Ausführungsplan an den Datenbankserver zu senden.

8. Datenbankserver, umfassend:
Empfängereinheit (51), konfiguriert zum Empfang von Ortsinformationen und einer "Structured Query Language"-, SQL, Anforderung durch einen Datenbankserver, die durch einen Client verschickt werden, wobei mindestens ein ausgeführter Ausführungsplan, der als zu speichern vorgegeben ist, in einem Cache des Clients gespeichert wird, und wobei die Ortsinformationen verwendet werden, um einen Cache-Ort anzugeben, um den Ausführungsplan zu speichern, der der SQL-Anforderung entspricht, und der Cache-Ort einem Cache des Clients entspricht;
eine Erfassungseinheit (52), konfiguriert zum Erfassen des Ausführungsplans, der der SQL Anforderung entspricht, der SQL-Anforderung entsprechend, die durch die Empfängereinheit empfangen wurde, wobei
die Erfassungseinheit (52) ferner konfiguriert ist zum Erfassen des Cache-Orts des Ausführungsplans nach den Ortsinformationen; und
eine Sendeeinheit (53), konfiguriert zum Senden des Ausführungsplans an den Client, wenn die Ortsinformationen vorgeben, dass der Cache-Ort des Ausführungsplans der Cache des Clients ist,
wobei, wenn der Ausführungsplan, der der SQL-Anforderung entspricht, im Cache des Clients existiert, Empfangen des durch den Client versendeten Ausführungsplans; und
der Datenbankserver ferner umfasst:
eine Ausführungseinheit (54), konfiguriert zum Ausführen des Ausführungsplans, der durch die Empfängereinheit empfangen wurde (51).

9. System zum Speichern eines Ausführungsplans, umfassend: einen Client und einen Datenbankserver, wobei
der Client konfiguriert ist, eine "Structured Query Language"-, SQL, Anforderung zu empfangen und zu erkennen, ob ein Ausführungsplan, der der SQL-Anforderung entspricht, in einem Cache des Clients existiert; wobei der Cache des Clients mindestens einen ausgeführten Ausführungsplan speichert, der als zu speichern vorgegeben wird;
der Client ferner konfiguriert ist, wenn ein Ausführungsplan, der der SQL-Anforderung entspricht, im Cache des Clients existiert, den Ausführungsplan an den Datenbankserver zu senden, sodass der Datenbankserver den Ausführungsplan ausführt; wenn kein Ausführungsplan, der der SQL-Anforderung entspricht, im Cache des Clients existiert, Erzeugen von Ortsinformationen und Senden der Ortsinformationen und der SQL-Anforderung an den Datenbankserver, wobei die Ortsinformationen verwendet werden, um einen Cache-Ort zum Speichern des Ausführungsplans anzugeben, der der SQL-Anforderung entspricht, und der Cache-Ort das Cache des Clients umfasst;
der Datenbankserver konfiguriert ist zum Empfangen der Ortsinformationen und der SQL-Anforderung, die durch den Client gesendet werden, Erfassen des Ausführungsplans, der der SQL-Anforderung entspricht, und Erfassen des Cache-Orts des Ausführungsplans nach den Ortsinformationen; und
der Datenbankserver ferner konfiguriert ist, den Ausführungsplan an den Client zu senden, wenn die Ortsinformationen vorgeben, dass der Cache-Ort des Ausführungsplans der Cache des Clients ist;
wobei der Client ferner konfiguriert ist zum Empfangen des Ausführungsplans, der durch den Datenbankserver gesendet wurde, und zum Speichern des Ausführungsplans im Cache des Clients.

## Revendications

1. Procédé pour stocker un plan d'exécution, comprenant :
réception (101), par un client, d'une demande en langage d'interrogation structuré, SQL ; une mémoire cache du client enregistrant au moins un plan d'exécution exécuté spécifié comme devant être enregistré ;
détection (102), par le client, s'il existe dans la mémoire cache du client un plan d'exécution correspondant à la demande SQL ;
si un plan d'exécution correspondant à la demande SQL existe dans la mémoire cache du client, envoi (103b), par le client, du plan d'exécution au serveur de base de données de sorte que le serveur de base de données exécute le plan d'exécution ;
si aucun plan d'exécution correspondant à la demande SQL n'existe dans la mémoire cache du client, exécution des étapes suivantes :
génération (103a), par le client, d'informations d'emplacement, les informations d'emplacement étant utilisées pour spécifier un emplacement de mémoire cache servant à enregistrer le plan d'exécution correspondant à la demande SQL, et l'emplacement de mémoire cache comprenant la mémoire cache du client,
envoi (104a), par le client, des informations d'emplacement et de la demande SQL au serveur de base de données ;
si les informations d'emplacement spécifient que l'emplacement de mémoire cache du plan d'exécution est la mémoire cache du client, réception (105a), par le client, du plan d'exécution généré et envoyé par le serveur de base de données et enregistrement du plan d'exécution dans la mémoire cache du client.

2. Procédé pour stocker un plan d'exécution selon la revendication 1, l'envoi, par le client, du plan d'exécution au serveur de base de données si le plan d'exécution correspondant à la demande SQL existe dans la mémoire cache du client de sorte que le serveur de base de données exécute le plan d'exécution comprenant :
la sélection, par le client si plusieurs plans d'exécution correspondant à la demande SQL existent dans la mémoire cache du client, d'un plan d'exécution quelconque parmi les plusieurs plans d'exécution et l'envoi du plan d'exécution sélectionné au serveur de base de données.

3. Procédé pour stocker un plan d'exécution selon la revendication 1, le procédé comprenant en outre, avant l'envoi, par le client, du plan d'exécution au serveur de base de données :
l'affichage, par le client en utilisant une interface graphique, des informations de paramètres du plan d'exécution ;
l'ajustement, par le client conformément à une instruction de modification des informations de paramètres, des informations de paramètres du plan d'exécution et l'enregistrement d'un plan d'exécution ajusté dans la mémoire cache du client ; et
l'étape d'envoi, par le client, du plan d'exécution au serveur de base de données comprend :
l'envoi, par le client, du plan d'exécution ajusté au serveur de base de données.

4. Procédé pour stocker un plan d'exécution, comprenant :
la réception (401), par un serveur de base de données, d'informations d'emplacement et d'une demande en langage d'interrogation structuré, SQL, qui sont envoyées par un client, au moins un plan d'exécution exécuté spécifié comme devant être enregistré étant enregistré dans une mémoire cache du client, et les informations d'emplacement étant utilisées pour spécifier un emplacement de mémoire cache servant à enregistrer le plan d'exécution correspondant à la demande SQL, et l'emplacement de mémoire cache comprenant une mémoire cache du client ;
l'acquisition (402), par le serveur de base de données, du plan d'exécution correspondant à la demande SQL ;
l'acquisition (403), par le serveur de base de données conformément aux informations d'emplacement, de l'emplacement de mémoire cache du plan d'exécution ; et
si les informations d'emplacement spécifient que l'emplacement de mémoire cache du plan d'exécution est la mémoire cache du client, l'envoi (404a), par le serveur de base de données, du plan d'exécution au client de sorte que le client enregistre le plan d'exécution dans la mémoire cache du client ;
le procédé comprenant en outre, avant la réception, par un serveur de base de données, des informations d'emplacement et d'une demande en langage d'interrogation structuré, SQL, qui sont envoyés par un client :
la réception, par le serveur de base de données, si le plan d'exécution correspondant à la demande SQL existe dans la mémoire cache du client, du plan d'exécution envoyé par le client et l'exécution du plan d'exécution reçu.

5. Client, comprenant :
une unité de réception (21), configurée pour recevoir une demande en langage d'interrogation structuré, SQL ; une mémoire cache du client enregistrant au moins un plan d'exécution exécuté spécifié comme devant être enregistré ;
une unité de détection (22), configurée pour détecter s'il existe dans la mémoire cache du client un plan d'exécution reçu par l'unité de réception et correspondant à la demande SQL ;
une unité de génération (23), configurée pour générer des informations d'emplacement si aucun plan d'exécution détecté par l'unité de détection et correspondant à la demande SQL n'existe dans la mémoire cache du client, les informations d'emplacement étant utilisées pour spécifier un emplacement de mémoire cache servant à enregistrer le plan d'exécution correspondant à la demande SQL, et l'emplacement de mémoire cache comprenant la mémoire cache du client ; et
une unité d'envoi (24), configurée pour envoyer les informations d'emplacement générées par l'unité de génération (23) et la demande SQL au serveur de base de données ;
l'unité de réception (21) étant en outre configurée pour recevoir le plan d'exécution envoyé par le serveur de base de données et correspondant à la demande SQL si les informations d'emplacement spécifient que l'emplacement de mémoire cache du plan d'exécution est la mémoire cache du client ; et
l'unité d'enregistrement (27) étant en outre configurée pour enregistrer le plan d'exécution reçu par l'unité de réception dans la mémoire cache du client ;
l'unité d'envoi (24) étant en outre configurée pour envoyer le plan d'exécution au serveur de base de données lorsque le plan d'exécution correspondant à la demande SQL existe dans la mémoire cache du client, de sorte que le serveur de base de données exécute le plan d'exécution.

6. Client selon la revendication 5 :
l'unité d'envoi (24) étant en outre configurée pour, si plusieurs plans d'exécution correspondant à la demande SQL existent dans la mémoire cache du client, sélectionner un plan d'exécution quelconque parmi les plusieurs plans d'exécution et envoyer le plan d'exécution sélectionné au serveur de base de données.

7. Client selon la revendication 5 ou 6, l'appareil comprenant en outre :
une unité d'affichage (25), configurée pour afficher, en utilisant une interface graphique, des informations de paramètres du plan d'exécution détecté par l'unité de détection ;
une unité d'ajustement (26), configurée pour ajuster, conformément à une instruction de modification des informations de paramètres, les informations de paramètres du plan d'exécution et affichées par l'unité d'affichage (25) ; et
une unité d'enregistrement (27), configurée pour enregistrer un plan d'exécution ajusté dans la mémoire cache du client ;
l'unité d'envoi (24) étant en outre configurée pour envoyer au serveur de base de données le plan d'exécution ajusté par l'unité d'ajustement (26).

8. Serveur de base de données, comprenant :
une unité de réception (51), configurée pour recevoir des informations d'emplacement et une demande en langage d'interrogation structuré, SQL, qui sont envoyées par un client, au moins un plan d'exécution exécuté spécifié comme devant être enregistré étant enregistré dans une mémoire cache du client et les informations d'emplacement étant utilisées pour spécifier un emplacement de mémoire cache pour enregistrer le plan d'exécution correspondant à la demande SQL, et l'emplacement de mémoire cache comprenant une mémoire cache du client ;
une unité d'acquisition (52), configurée pour acquérir, conformément à la demande SQL reçue par l'unité de réception, le plan d'exécution correspondant à la demande SQL,
l'unité d'acquisition (52) étant en outre configurée pour acquérir l'emplacement de mémoire cache du plan d'exécution conformément aux informations d'emplacement ; et
une unité d'envoi (53), configurée pour envoyer le plan d'exécution au client afin d'enregistrer le plan d'exécution si les informations d'emplacement spécifient que l'emplacement de mémoire cache du plan d'exécution est la mémoire cache du client ;
dans lequel si le plan d'exécution correspondant à la demande SQL existe dans la mémoire cache du client, recevoir le plan d'exécution envoyé par le client ; et
le serveur de base de données comprenant en outre :
une unité d'exécution (54), configurée pour exécuter un plan d'exécution reçu par l'unité de réception (51).

9. Système pour stocker un plan d'exécution, comprenant : un client et un serveur de base de données,
le client étant configuré pour recevoir une demande en langage d'interrogation structuré, SQL, et détecter si un plan d'exécution correspondant à la demande SQL existe dans une mémoire cache du client ; la mémoire cache du client enregistrant au moins un plan d'exécution exécuté spécifié comme devant être enregistré ;
le client étant en outre configuré pour, s'il existe dans la mémoire cache du client un plan d'exécution correspondant à la demande SQL, envoyer le plan d'exécution au serveur de base de données de sorte que le serveur de base de données exécute le plan d'exécution ; si aucun plan d'exécution correspondant à la demande SQL n'existe dans la mémoire cache du client, générer des informations d'emplacement et envoyer les informations d'emplacement ainsi que la demande SQL au serveur de base de données, les informations d'emplacement étant utilisées pour spécifier un emplacement de mémoire cache servant à enregistrer le plan d'exécution correspondant à la demande SQL, et l'emplacement de mémoire cache comprenant la mémoire cache du client,
le serveur de base de données étant configuré pour recevoir les informations d'emplacement et la demande SQL qui sont envoyées par le client, acquérir le plan d'exécution correspondant à la demande SQL et acquérir l'emplacement de mémoire cache du plan d'exécution conformément aux informations d'emplacement ; et
le serveur de base de données étant en outre configuré pour envoyer le plan d'exécution au client si les informations d'emplacement spécifient que l'emplacement de mémoire cache du plan d'exécution est la mémoire cache du client ;
le client étant en outre configuré pour recevoir le plan d'exécution envoyé par le serveur de base de données et enregistrer le plan d'exécution dans la mémoire cache du client.
